# EUROPÄISCHE PATENTSCHRIFT

(11) **EP 3 176 061 B1**
(45) Veröffentlichungstag und Bekanntmachung des Hinweises auf die Patenterteilung: **13.11.2019**
(21) Anmeldenummer: 15197329.4
(22) Anmeldetag: 01.12.2015
(51) Int. Cl.: B62H 7/00, A63B 22/00, A63B 26/00, G09B 9/058

(54) **TRAININGSVORRICHTUNG FÜR MOTORRADFAHRER**
TRAINING DEVICE FOR MOTORCYCLISTS
DISPOSITIF D'ENTRAÎNEMENT POUR CONDUCTEURS DE MOTOS

(43) Veröffentlichungstag der Anmeldung: 07.06.2017
(73) Patentinhaber: Thurner, Jörg, 1180 Wien (AT)
(72) Erfinder: Thurner, Jörg, 1180 Wien (AT)
(74) Vertreter: Babeluk, Michael

(56) Entgegenhaltungen:
- WO-A1-2005/091250
- WO-A2-2010/045627
- DE-A1-102015 113 225
- GR-B- 1 008 062
- US-A1- 2003 059 744
- US-A1- 2011 039 664
- US-A1- 2014 315 157
- US-A1- 2015 279 228
- Anonymous: "Wheelie Machine For Sale | East Rand | Motorcycling and Scooters | 39516141 | Junk Mail Classifieds", , 14. Januar 2015 (2015-01-14), XP055271868, Gefunden im Internet: URL:http://www.junkmail.co.za/motoring/mot orcycling-and-scooters/gauteng/johannesbur g/east-rand/wheelie-machine-for-sale-/3951 6141 [gefunden am 2016-05-11]

## Beschreibung

Die Erfindung betrifft eine Trainingsvorrichtung für Motorradfahrer gemäß dem Oberbegriff von Patentanspruch 1.

Eine Vielzahl von Motorradfahrern ist daran interessiert, den so genannte Wheelie zu erlernen, bei dem zunächst durch starke Beschleunigung und Gewichtsverlagerung das Vorderrad eines Motorrads vom Boden abgehoben wird und in weiterer Folge ausschließlich auf dem Hinterrad gefahren wird.

Das Erlernen des Wheelies ist schwierig und in der Regel mit Stürzen und Verletzungen verbunden, da vor Erreichen eines Gleichgewichtszustandes zunächst in einem hochdynamischen Prozess das Anheben des Vorderrads bewirkt werden muss. Bei leistungsstarken Motorrädern und griffiger Straße kann das Anheben hauptsächlich durch maximale Leistungsanforderung bewirkt werden. Ein hoher Schwerpunkt ist dabei auch von Vorteil. In der Regel muss jedoch das Aufstellen durch schnelles Einkuppeln und Gewichtsverlagerung, d.h. Anreißen am Lenker unterstützt werden. Werden diese Maßnahmen in zu geringem Ausmaß ausgeführt, hebt das Vorderrad allenfalls kurzfristig ab, ohne jedoch den Gleichgewichtszustand zu erreichen, in dem die weitere Fahrt auf dem Hinterrad möglich ist. Werden die Maßnahmen jedoch übertrieben, ist ein Sturz unvermeidlich. Sehr schwierig ist der Übergang vom ruckartigen Aufstellen zum eigentlichen Wheelie in weitgehend konstanter Stellung. Eine zusätzliche Komplikation ist dadurch gegeben, dass unabhängig von der Bewegung um die Querachse auch noch das Kippen des Motorrads um die Längsachse verhindert werden muss.

Aus der US 8,408,911 B ist eine Vorrichtung bekannt, die darauf abzielt, ein Wheelie zu trainieren, ohne die oben dargestellten Gefahren in Kauf nehmen zu müssen. Dabei wird ein Motorrad mit dem Hinterrad auf eine Rollenanordnung gestellt und das Vorderrad wird über ein Gestänge entlang einer Kulisse geführt. Zusätzlich werden Maßnahmen zur seitlichen Abstützung vorgeschlagen. Mit dieser Vorrichtung ist es möglich, die Gefahren zu verringern, die aus Fehlern des untrainierten Fahrers resultieren. Nachteilig an dieser Vorrichtung ist jedoch, dass das Erlernen des Wheelie selbst nicht wesentlich erleichtert wird, da der Fahrer nach wie vor den Übergang von der Aufstellbewegung in den Gleichgewichtszustand selbst finden muss. Als nachteilig hat sich auch die relativ starre Halterung des Vorderrads herausgestellt, die insofern praxisfremd ist, als die Lenkbewegung des Vorderrads während der tatsächlichen Ausführung eines Wheelies leicht möglich und für das Fahrverhalten weitgehend unbedeutend ist. Dies führt dazu, dass relativ lange Ausbildungszeiten bzw. Übungszeiten erforderlich sind und dass von vielen Fahrern die Situation an der Übungsvorrichtung als deutlich unterschiedlich zu der realen Situation auf der Straße empfunden wird.

Aus der WO 2010/045627 A, der US 2005/175968 A, der US 2,534967 A und der US 2003/059744 A sind verschiedene Trainingsvorrichtungen bekannt, mit denen das Training von Motorradfahrern erleichtert werden kann. Zum Grundkonzept her wird der Bewegungsspielraum des Motorrads durch Einspannungen stark eingeschränkt, was den Trainingserfolg beeinträchtigt. Besonders nachteilig ist jedoch, dass der Bewegungsspielraum des Motorrads stets von einer Grundstellung ausgeht, die im Wesentlichen dem normalen Fahrzustand entspricht. Dadurch ist eine schrittweise Steigerung des Schwierigkeitsgrads nicht möglich.

Aufgabe der vorliegenden Erfindung ist es, diese Nachteile zu vermeiden und eine Vorrichtung der oben beschriebenen Art so weiterzubilden, dass eine weitgehend gefahrlose Möglichkeit des Erlernens von Wheelies gegeben ist, wobei jedoch gleichzeitig eine kontinuierliche Steigerung des Schwierigkeitsgrad der Übungen in Abhängigkeit der zunehmenden Kenntnisse des Fahrers möglich ist. Dabei soll das Handling des Motorrads auf der Vorrichtung weitgehend dem im Fahrbetrieb auf der Straße entsprechen.

Erfindungsgemäß werden diese Aufgaben durch die Merkmale von Patentanspruch 1 gelöst.

Es ist ein wesentlicher Aspekt der Erfindung, dass das Hinterrad abgesehen von seitlichen Bewegungen, die durch den gegebenen Freiraum ermöglicht werden, an seinem Platz verbleibt. Daher erfolgt die Schwenkbewegung aus der Normalstellung in die Abstützposition im Wesentlichen um die Achse des Hinterrads.

Ein wesentlicher Vorteil der vorliegenden Erfindung besteht darin, dass es problemlos möglich ist, den Schwierigkeitsgrad der Übungen, die auf der Vorrichtung durchzuführen sind, an die Kenntnisse und Fähigkeiten des jeweiligen Fahrers anzupassen. Für den ungeübten Fahrer wird man dabei von einer weitgehend angebotenen Position des Vorderrads, also einer hohen Abstützposition ausgehen, so dass der Fahrer nur einen relativ geringen Eingriff benötigt, um in die nur wenig entfernte Gleichgewichtsposition zu kommen. Aufgrund dieser geringen Entfernung ist auch nur ein geringer Freiraum notwendig, was die Sicherheit entsprechend erhöht.

Theoretisch kann man den Fahrer durch Anheben des Vorderrads direkt in die Gleichgewichtsposition bringen, so dass dieser zunächst nur das Fahren auf dem Hinterrad erlernen kann.

Mit zunehmender Geschicklichkeit des Fahrers kann dann die Abstützposition schrittweise abgesenkt werden, so dass der Fahrer stärkere Eingriffe an Gaspedal, Kupplung und/oder eine stärkere Gewichtsverlagerung benötigt, um die Gleichgewichtsposition zu erreichen.

Wichtig ist in diesem Zusammenhang auch, dass auch bei Ausführung der vereinfachten Übungen die seitliche Balance stets durch den Fahrer aufrechterhalten werden muss, so dass abgesehen von der bewussten Vereinfachung sehr realitätsnahe Zustände vorliegen.

Der Fahrer kann die Übungen mit seinem eigenen Motorrad ausführen, das er gewohnt ist, so dass der spätere Übergang in den realen Fahrbetrieb keine großen Schwierigkeiten macht.

Die Erfindung betrifft insbesondere auch eine Trainingsvorrichtung, bei der vorgesehen ist, dass die Rollenanordnung mindestens eine gebremste Rolle aufweist. Die Bremsung der Rolle ermöglicht nicht nur ein möglichst realitätsnahes Fahrgefühl, sondern ist auch eine wichtige Voraussetzung dafür, dass der Fahrer ein entsprechendes Moment um die Querachse aufbauen kann, um das Motorrad aufzustellen.

Vorzugsweise ist eine Steuerungseinrichtung vorgesehen, die den Widerstand der gebremsten Rolle in einer Weise vorgibt, dass dieser dem Fahrwiderstand und den aus der Beschleunigung resultierenden Kräften des Motorrads im Realbetrieb entspricht. An der Steuerungseinrichtung kann die Masse und die Schwerpunktlage des betreffenden Motorrads eingestellt werden, um eine weitgehende Übereinstimmung mit der Realität zu erreichen.

Besonders bevorzugt weist die Rollenanordnung mindestens zwei Rollen auf, die einen zylindrischen Abschnitt aufweisen, auf dem das Hinterrad des Motorrads parallel zu seiner Achse frei beweglich abrollen kann. Dadurch kann der Fahrer in realitätsnaher Weise die Aufrechterhaltung der seitlichen Balance üben.

Eine sinnvolle Begrenzung von seitlichen Auslenkbewegungen wird dadurch erreicht, dass die Rollen der Rollenanordnung seitlich beidseits des zylindrischen Abschnitts konische Abschnitte mit sich nach außen vergrößerndem Durchmesser aufweisen und dass die konischen Abschnitte vorzugsweise schraubenförmige Strukturen aufweisen, um das Hinterrad des Motorrads zur Mitte der Rollen zu führen. Die seitliche Bewegung des Hinterrades wird daher nicht durch einen Anschlag begrenzt, sondern durch eine progressiv zunehmende Kraft, die das Hinterrad zum zylindrischen Abschnitt hin zurückführt.

Eine weitere Erhöhung der Betriebssicherheit kann dadurch erreicht werden, dass die Rollenanordnung neben mindestens einer gebremsten Rolle eine ungebremste Sicherheitsrolle aufweist, die zwischen einer Normalstellung und einer Sicherheitsstellung beweglich ist, wobei in der Sicherheitsstellung die Verbindung des Hinterrads des Motorrads mit der gebremsten Rolle unterbrochen wird. Wenn der Fahrer beispielsweise in unbeabsichtigter Weise plötzlich eine zu große Leistung freisetzt, die aufgrund der Massenträgheit des Systems und der naturgemäß begrenzten Regelgeschwindigkeiten zu einer gefährlichen und sonst nicht beherrschbaren Situation führen würde, kann auf diese Weise das Hinterrad in eine Leerlauf-Stellung gebracht werden, in der durch das Antriebsmoment des Hinterrads des Motorrads keine Verstärkung der Aufstellbewegung mehr möglich ist.

In besonders bevorzugter Weise ist der Freiraum für das Vorderrad des Motorrads durch eine längenveränderliche Gurtanordnung ausgebildet. Dies bedeutet, dass bei straff angezogenem Gurt das Vorderrad in der Abstützposition festgelegt ist, wodurch eine Ausgangsposition für den Beginn einer Übung oder eine Rückfallposition zur Neutralisierung gefährlicher Fahrzustände gegeben ist. Die eigentliche Übung wird in einer Stellung absolviert, in der die Gurtanordnung eine vorbestimmte Entfernung des Vorderrads von der Abstützposition ermöglicht. Im Normalfall wird diese Entfernung so groß sein, dass zumindest die Gleichgewichtsposition erreichbar ist. Es sollte auch eine Toleranz für eine vernünftige Überschwingung gegeben sein. Es ist aber für erste Übungen von ungeübten Fahrer auch möglich, den Freiraum geringer einzustellen, um nur geringe Bewegungen des Motorrads zuzulassen.

Eine wesentliche Anpassung an der Realität wird dadurch erreicht, dass die Halterung zur Abstützung eines Vorderrades vorzugsweise eine freie Betätigung des Lenkers ermöglicht.

Gegebenenfalls kann eine Erhöhung der Sicherheit dadurch erreicht werden, dass eine verstellbare seitliche Abstützung für das Motorrad oder seinen Fahrer vorgesehen ist. Alternativ oder zusätzlich kann auch eine Sicherheitsaufhängung für den Fahrer vorgesehen sein.

Die vorliegende Erfindung betrifft auch ein Verfahren zum Trainieren von Motorradfahrern, bei dem ein Fahrer auf einem Motorrad mit dem Hinterrad in seitlicher Richtung frei auf einer Rollenvorrichtung fährt, wobei das Vorderrad wahlweise in eine angehobene Abstützposition gebracht wird und der Fahrer des Motorrads ausgehend von dieser Abstützposition eine Gleichgewichtsposition erreichen kann, in der er bei weiter angehobenem Vorderrad ausschließlich auf dem Hinterrad fährt. Motorrad im Sinne der Erfindung bedeutet ein einspuriges Kraftfahrzeug im herkömmlichen Sinn, das dazu vorgesehen ist, auf Straßen betrieben zu werden und nicht einen Simulator, der als Fahrzeug untauglich ist.

Vorzugsweise wird ein Freiraum zum weiteren Anheben des Vorderrads zur Verfügung gestellt, der das Erreichen der Gleichgewichtsposition ermöglicht.

In besonders bevorzugter Weise wird das erfindungsgemäße Verfahren so ausgeführt, dass bei Erreichen einer gefährlichen Situation das Vorderrad durch Einschränkung des Freiraums in die Abstützposition zurückgeführt wird.

Es ist bevorzugt, dass die Rollenanordnung hydraulisch gebremst wird. Dies ermöglicht weiterreichende Freiheitsgrade bei der Regelung der Bremsung.

Insbesondere wird der Schwierigkeitsgrad der Übungen im Verlauf des Trainings dadurch gesteigert, dass die Abstützposition ausgehend von einer hohen, d.h. stark angehobenen Position im Bereich der Gleichgewichtsposition zunehmend abgesenkt wird. Der Übergang von dem dynamischen Vorgang des Aufreißens in die Gleichgewichtsposition ist naturgemäß umso schwieriger je weiter unten die Schwenkbewegung startet und umso einfacher, je näher die Ausgangsstellung bereits der Gleichgewichtsposition ist. Überdies muss der zur Verfügung gestellte Freiraum umso größer sein, je weiter unten die Übung beginnt.

In der Folge wird die vorliegende Erfindung anhand der in den Figuren dargestellten Ausführungsvarianten näher erläutert. Es zeigen:
- Fig. 1: eine erfindungsgemäße Trainingsvorrichtung in einer Ansicht von vorne;
- Fig. 2: eine seitliche Ansicht der Vorrichtung von Fig. 1;

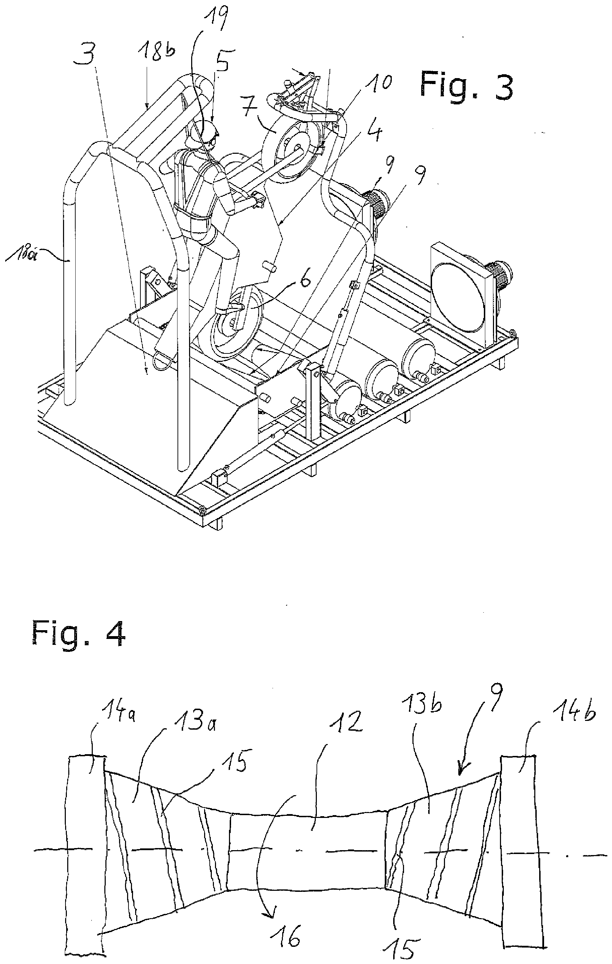

- Fig. 3: eine axonometrische Ansicht dieser Vorrichtung;
- Fig. 4: ein Detail in einer Ansicht von vorne;
- Fig. 5: eine weitere Ausführungsvariante in einer seitlichen Darstellung;
- Fig. 6: die Ausführungsvariante von Fig. 5 in einer Ansicht von vorne; und

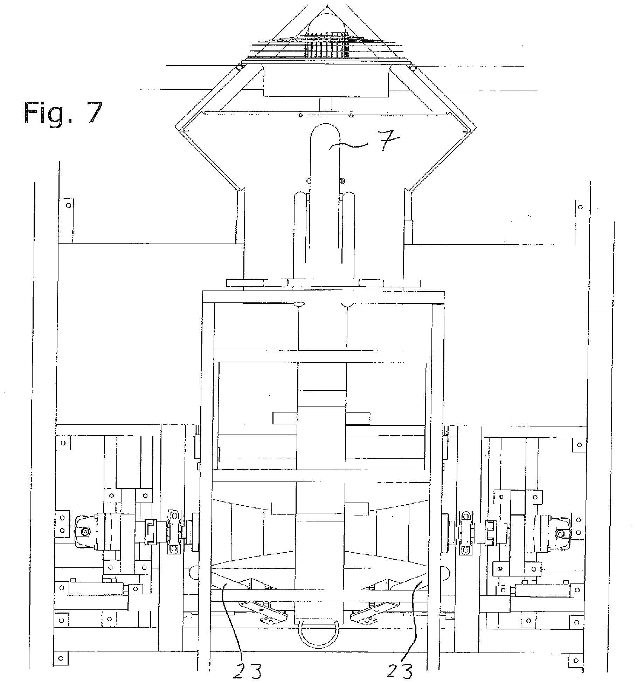

- Fig. 7: einen Grundriss der Variante von Fig. 5 und Fig. 6.

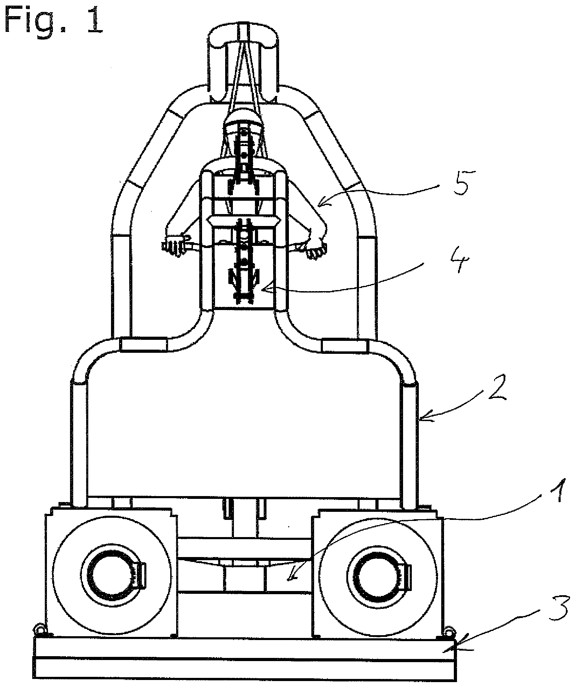

Die Trainingsvorrichtung von Fig. 1 besteht aus einer Rollenanordnung 1 und einer Halterung 2, die auf einem Grundgestell 3 befestigt sind. Die Trainingsvorrichtung ist dazu ausgebildet, ein Motorrad 4 aufzunehmen, das von einem Fahrer 5 gelenkt wird. Dabei rollt das Hinterrad 6 des Motorrads 4 auf der Rollenanordnung 1 ab und wird durch diese gebremst. Das Vorderrad 7 des Motorrads 4 wird auf der Halterung 2 gelagert.

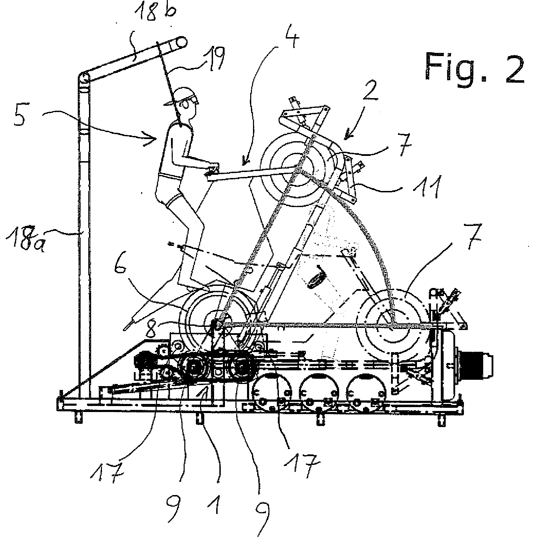

Die Halterung 2 ist um die Achse 8 des Hinterrads 6 schwenkbar gelagert und kann so von einer in Fig. 2 mit unterbrochenen Linien dargestellten Normalstellung, die einem gewöhnlichen Fahrbetrieb des Motorrads 4 entspricht, in eine angehobene Position gebracht werden, die mit durchgezogenen Linien dargestellt ist.

Das Vorderrad 7 des Motorrads 4 ist durch mindestens einen Gurt 10 an der Halterung 2 festgelegt, der Teil einer Gurtanordnung 11 ist. Die Gurtanordnung 11 ist dabei so aufgebaut, dass ein je nach Betriebszustand einstellbarer Freiraum für das Vorderrad 7 des Motorrads 4 gegeben ist, der es ermöglicht, das Vorderrad 7 von der Halterung 2 anzuheben. Jedenfalls wird durch die Gurtanordnung 11 eine freie Schwenkbewegung des Lenkers 12 des Motorrads 4 ermöglicht.

Wenn der Fahrer im Zuge der Übungen das Motorrad aufreißt, um in die Gleichgewichtsposition zu kommen, dann rollen die Gurte 10 weitgehend widerstandslos ab und ermöglichen ein Abheben des Vorderrads 7 von der Halterung 2. Falls der Fahrer 5 eine unzulässig große Aufstellbewegung über die Gleichgewichtsposition hinaus ausführt, die zu einem Sturz führen würde, wird das Ende des Freiraums erreicht und die Gurte 10 geben keine weiter Länge frei, so dass das Motorrad 4 in dieser Grenzstellung gehalten wird, bis der Fahrer 5 eine entsprechende Aktion setzt, um das Vorderrad 7 des Motorrads 4 wieder abzusenken.

Die Gurtanordnung ist aber auch mit einer aktiven Rückholeinrichtung ausgestattet, die in Gefahrensituationen den Gurt 10 motorisch einzieht, so dass auch ohne Mitwirkung des Fahrers 5 eine Rückkehr des Vorderrads 7 auf die Halterung 2 erreicht werden kann, um so eine sichere Position zu erreichen.

Das Hinterrad 6 des Motorrads 4 kann frei auf zwei Rollen 9 der Rollenanordnung 1 ablaufen, wie auf einem Rollenprüfstand, wobei eine seitliche Bewegung zugelassen wird. Die Rollen 9 besitzen dabei einen mittleren zylindrischen Abschnitt 12, an den seitlich zwei konische Abschnitte 13a, 13b anschließen. Endscheiben 14 schließen die Rollen 9 nach außen hin ab. Auf den konischen Abschnitten 13a, 13b sind schraubenförmige Strukturen 15 in der Form von Vorsprüngen oder Rillen vorgesehen, die die Aufgabe haben, dass das Hinterrad 6 des Motorrads 4 zur Mitte, d.h. den zylindrischen Abschnitt 12, hin zu führen. Die Drehrichtung der Rolle 9 ist mit Pfeil 16 angedeutet.

An sich ist es ausreichend, nur eine der zwei Rollen 9 in der oben beschriebenen Weise mit den zwei konischen Abschnitten 13a, 13b auszuführen, bevorzugt werden aber beide Rollen 9 so ausgebildet.

Die Rollen 9 werden hydraulisch gebremst, wobei durch eine nicht dargestellte Steuerungseinrichtung das jeweilige Bremsmoment so festgelegt wird, dass eine möglichst naturgetreue Fahrsituation gegeben ist. Das Bremsmoment wird mit der Geschwindigkeit erhöht, um den ansteigenden Fahrwiderstand abzubilden, und es wird der Masse des Motorrads 4 samt Fahrer 5 entsprechend die Trägheit beim Beschleunigen simuliert.

Vor und hinter den Rollen 9 der Rollenanordnung 1 sind Sicherheitsrollen 17 vorgesehen, die im Normalbetrieb das Hinterrad 6 des Motorrads 4 nicht oder nur leicht berühren. Beim Auftreten einer gefährlichen Situation können diese Sicherheitsrollen 17 sehr schnell angehoben werden, wodurch das Hinterrad 6 des Motorrads 4 sofort von den gebremsten Rollen 9 entkoppelt werden kann. Dadurch ist es nicht mehr möglich, über das Hinterrad 6 des Motorrads 4 ein Aufstellmoment zu generieren.

Die Sicherheit des Fahrers 5 kann durch eine Sicherheitsaufhängung 18a, 18b, 19, bestehend aus einer senkrechten Stütze 18a, einem Kragträger 18b und einer Gurtanordnung 19 erhöht werden. Die Gurtanordnung 19 ist dabei so lose, dass ein normaler Betrieb unbehindert möglich ist. Im Falle eines Sturzes wird der Fahrer 5 durch Gurte aufgefangen und kann nicht durch das Motorrad 4 oder die Rollenanordnung 1 verletzt werden.

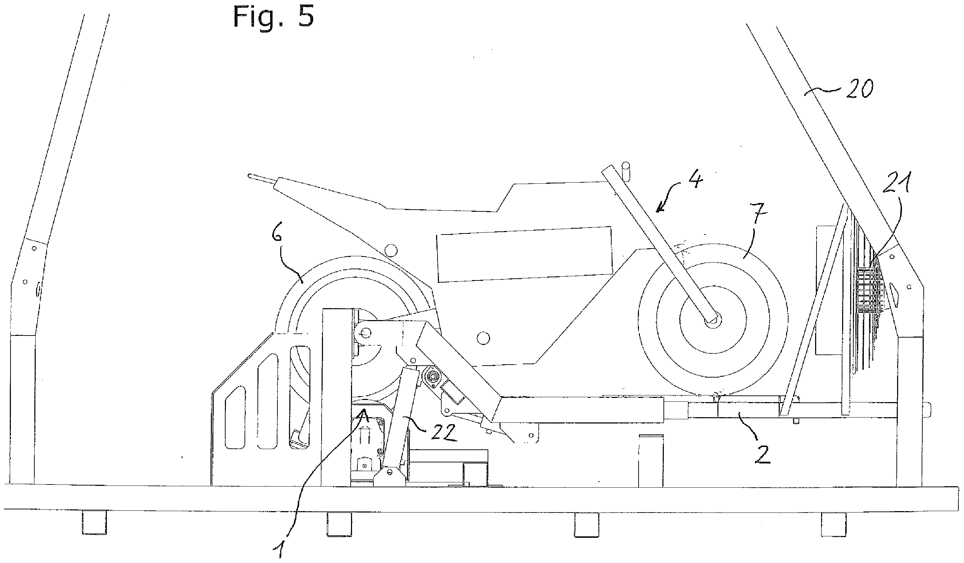

Bei der Ausführungsvariante von Fig. 5 ist zusätzlich ein Rahmen 20 ersichtlich, der dazu dient, nicht dargestellte Sicherheitsleinen oder dergleichen für den Fahrer und/oder das Motorrad 4 zu befestigen, um die Verletzungsgefahr zu verringern. Ein an der Halterung 2 befestigtes Gebläse 21 dient dazu, den Fahrtwind zu simulieren, was primär für die Kühlung des Motors des Motorrads 4 von Bedeutung ist. Hydraulikzylinder 22 dienen dazu, die Halterung 2 von der dargestellten waagrechten Stellung in eine nach oben geneigte Stellung zu bringen.

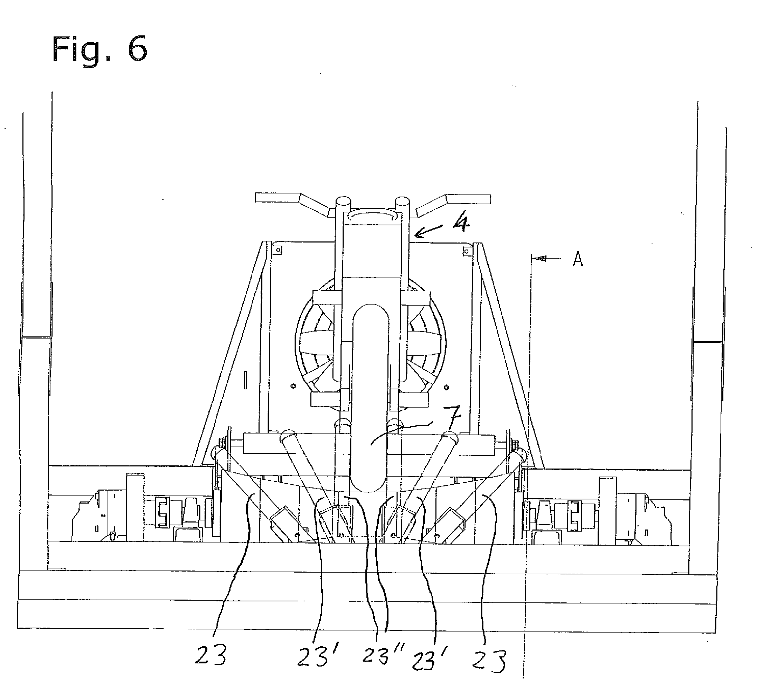

Eine zusätzliche Maßnahme ist insbesondere aus Fig. 6 ersichtlich, nämlich neben dem Hinterrad 6 befestigte verstellbare Begrenzungsrollen 23. Diese sind im Wesentlichen stabförmig ausgebildet und stehen in ihrer Grundstellung, die mit durchgezogenen Linien dargestellt ist, seitlich relativ weit vom Hinterrad 6 ab, so dass dieses auf den Rollen 9 einen großen seitlichen Bewegungsspielraum hat. Zur Unterstützung eines noch nicht geübten Fahrers können diese Begrenzungsrollen 23 in eine dem Hinterrad 6 nähere Stellung gebracht werden, die in der Fig. 6 mit unterbrochenen Linien als 23' angedeutet ist. Damit wird der Bewegungsspielraum des Hinterrads 6 eingeschränkt, wodurch die Gefahr von Fahrfehlern vermindert wird. Falls ein völliger Anfänger maximal unterstützt werden soll, dann kann der seitliche Bewegungsspielraum des Hinterrads 6 auch gänzlich eliminiert werden, indem die Begrenzungsrollen 23 vollständig an das Hinterrad 6 angelegt werden, was mit 23" dargestellt ist.

Wesentlich an der vorliegenden Erfindung ist es, dass durch die Neigung der Halterung 2 je nach den bereits erlangten Fähigkeiten des Fahrers der Schwierigkeitsgrad der Übung variabel gestaltet werden kann. Es ist naturgemäß leichter, ein Motorrad aus einer bereits stark nach oben geneigten Stellung aufzurichten, um den Gleichgewichtszustand zu erreichen, als dies aus der waagrechten Normalstellung zu tun.

Zusätzlich zu dieser Einstellmöglichkeit kann das Ausmaß festgelegt werden, um das das Motorrad 4 von der Halterung 2 abgehoben werden kann, also letztlich der Winkel, um den das Motorrad nach oben gekippt werden kann. Auf diese Weise kann der Schwierigkeitsgrad der Übungen in mehrfacher Hinsicht präzise gesteuert werden, um einen optimalen Trainingseffekt zu erhalten.

Zusätzlich ist es möglich, beispielsweise durch entsprechende Gurte die Bewegung im Bereich der Vorderradgabel zu begrenzen. Dadurch wird nicht primär der Schwierigkeitsgrad der Übung verändert, sondern der Grad der Sicherheit.

Die vorliegende Erfindung ermöglicht es jedenfalls, schwierige Fahrmanöver, wie Wheelies, durch Übungen sicher und mit schrittweise ansteigendem Schwierigkeitsgrad am eigenen Motorrad zu erlernen.

## Patentansprüche

1. Trainingsvorrichtung für Motorradfahrer mit einer Rollenanordnung (1) zur Aufnahme eines Hinterrades (6) und einer Halterung (2) zur Abstützung ei9nes Vorderrades (7) eines Motorrades (4), wobei die Halterung (2) aus einer Normalstellung in eine Abstützposition schwenkbar ist, und ausgehend von dieser Abstützposition einen veränderlichen Freiraum zum Anheben des Vorderrads (7) aufweist, und wobei das Hinterrad(6) in seitlicher Richtung frei auf der Rollenanordnung (1) beweglich ist und weiter an seinem Platz verbleibt, wobei die Rollen freilaufend oder gebremst sind und **dadurch gekennzeichnet, dass** die Abstützposition in der Höhe veränderlich ist.

2. Trainingsvorrichtung nach Anspruch 1, **dadurch gekennzeichnet, dass** die Rollenanordnung (1) mindestens eine gebremste Rolle (9) aufweist.

3. Trainingsvorrichtung nach Anspruch 2, **dadurch gekennzeichnet, dass** eine Steuerungseinrichtung vorgesehen ist, die den Widerstand der gebremsten Rolle (9) in einer Weise vorgibt, dass dieser dem Fahrwiderstand und den aus der Beschleunigung resultierenden Kräften des Motorrads (4) im Realbetrieb entspricht.

4. Trainingsvorrichtung nach einem der Ansprüche 1 bis 3, **dadurch gekennzeichnet, dass** die Rollenanordnung (1) mindestens zwei Rollen (9) aufweist, von denen mindestens eine einen zylindrischen Abschnitt (12) aufweist, auf dem das Hinterrad (6) des Motorrads (4) parallel zu seiner Achse (8) frei beweglich abrollen kann.

5. Trainingsvorrichtung nach Anspruch 4, **dadurch gekennzeichnet, dass** die mindestens eine Rolle (9) der Rollenanordnung (1) seitlich beidseits des zylindrischen Abschnitts (12) konische Abschnitte (13a, 13b) mit sich nach außen vergrößerndem Durchmesser aufweisen und dass die konischen Abschnitte (13a, 13b) vorzugsweise schraubenförmige Strukturen (15) aufweisen, um das Hinterrad (6) des Motorrads (4) zur Mitte der Rollen (9) zu führen.

6. Trainingsvorrichtung nach einem der Ansprüche 1 bis 5, **dadurch gekennzeichnet, dass** die Rollenanordnung (1) neben mindestens einer gebremsten Rolle (9) eine ungebremste Sicherheitsrolle (17) aufweist, die zwischen einer Normalstellung und einer Sicherheitsstellung beweglich ist, wobei in der Sicherheitsstellung die Verbindung des Hinterrads (6) des Motorrads (4) mit der gebremsten Rolle (9) unterbrochen wird.

7. Trainingsvorrichtung nach einem der Ansprüche 1 bis 6, **dadurch gekennzeichnet, dass** der Freiraum für des Vorderrad (7) durch eine längenveränderliche Gurtanordnung (11) ausgebildet ist.

8. Trainingsvorrichtung nach einem der Ansprüche 1 bis 7, **dadurch gekennzeichnet, dass** die Halterung (2) zur Abstützung eines Vorderrades (7) eine freie Schwenkbewegung des Lenkers (12) des Motorrads (4) ermöglicht.

9. Trainingsvorrichtung nach einem der Ansprüche 1 bis 8, **dadurch gekennzeichnet, dass** eine verstellbare seitliche Abstützung für das Motorrad (4) oder seinen Fahrer (5) vorgesehen ist und dass vorzugsweise eine Sicherheitsaufhängung (18a, 18b, 19) für den Fahrer (5) des Motorrads (4) vorgesehen ist.

10. Trainingsvorrichtung nach einem der Ansprüche 1 bis 9, **dadurch gekennzeichnet, dass** verstellbare, vorzugsweise schwenkbar angeordnete Begrenzungsrollen (23) zur variablen Begrenzung der seitlichen Bewegung des Hinterrads (6) vorgesehen sind.

11. Verfahren zum Trainieren von Motorradfahrern mit einer Trainingsvorrichtung nach Anspruch 1, bei dem ein Fahrer (5) auf einem Motorrad (4) mit dem Hinterrad (6) in seitlicher Richtung frei auf einer Rollenanordnung (1) fährt, wobei das Vorderrad (7) ausgehend von einer Normalstellung in eine angehobene Abstützposition gebracht wird und der Fahrer (5) ausgehend von dieser Abstützposition eine Gleichgewichtsposition erreichen kann, in der er bei weiter angehobenem Vorderrad (7) ausschließlich auf dem Hinterrad (6) fährt.

12. Verfahren nach Anspruch 11, **dadurch gekennzeichnet, dass** ein Freiraum zum weiteren Anheben des Vorderrads (7) des Motorrads (4) zur Verfügung gestellt wird, der das Erreichen der Gleichgewichtsposition ermöglicht.

13. Verfahren nach einem der Ansprüche 11 oder 12, **dadurch gekennzeichnet, dass** bei Erreichen einer gefährlichen Situation das Vorderrad (7) des Motorrads (4) durch Einschränkung des Freiraums in die Abstützposition zurückgeführt wird.

14. Verfahren nach einem der Ansprüche 11 bis 13, **dadurch gekennzeichnet, dass** die Rollenanordnung (1) hydraulisch gebremst wird.

15. Verfahren nach einem der Ansprüche 11 bis 14, **dadurch gekennzeichnet, dass** der Schwierigkeitsgrad der Übungen im Verlauf des Trainings dadurch gesteigert wird, dass die Abstützposition ausgehend von einer stark angehobenen Position im Bereich der Gleichgewichtsposition zunehmend abgesenkt wird.

## Claims

1. Training device for motorcyclists having a roller arrangement (1) for accommodating a rear wheel (6) and a holder (2) for supporting a front wheel (7) of a motorcycle (4), wherein the holder (2) is pivotable from a normal position into a support position, and has a variable free space for lifting the front wheel (7) starting from this support position, and wherein the rear wheel (6) is freely movable in the lateral direction on the roller arrangement (1) and remains further in its place, wherein the rollers are free-running or braked and **characterised in that** the support position is variable in height.

2. Training device according to claim 1, **characterised in that** the roller arrangement (1) has at least one braked roller (9).

3. Training device according to claim 2, **characterised in that** a control device is provided which determines the resistance of the braked roller (9) in such a way that this corresponds to the driving resistance and the forces resulting from the acceleration of the motorcycle (4) in real operation.

4. Training device according to one of claims 1 to 3, **characterised in that** the roller arrangement (1) comprises at least two rollers (9), at least one of which comprises a cylindrical section (12) on which the rear wheel (6) of the motorcycle (4) can freely roll parallel to its axis (8).

5. Training device according to claim 4, **characterised in that** the at least one roller (9) of the roller arrangement (1) has conical sections (13a, 13b) laterally on either side of the cylindrical section (12) and having an outwardly increasing diameter, and **in that** the conical sections (13a, 13b) preferably have helical structures (15) for guiding the rear wheel (6) of the motorcycle (4) towards the center of the rollers (9).

6. Training device according to one of claims 1 to 5, **characterised in that** the roller arrangement (1) comprises, in addition to at least one braked roller (9), an unbraked safety roller (17) which is movable between a normal position and a safety position, wherein the connection between the rear wheel (6) of the motorcycle (4) and the braked roller (9) is interrupted in the safety position.

7. Training device according to one of claims 1 to 6, **characterised in that** the free space for the front wheel (7) is formed by a variable-length belt arrangement (11).

8. Training device according to one of claims 1 to 7, **characterised in that** the holder (2) for supporting a front wheel (7) allows a free pivoting movement of the handlebar (12) of the motorcycle (4).

9. Training device according to one of claims 1 to 8, **characterised in that** an adjustable lateral support is provided for the motorcycle (4) or its rider (5), and **in that** preferably a safety suspension (18a, 18b, 19) is provided for the rider (5) of the motorcycle (4).

10. Training device according to one of claims 1 to 9, **characterised in that** adjustable, preferably pivotably arranged limiting rollers (23) are provided for variably limiting the lateral movement of the rear wheel (6).

11. Method for training motorcyclists with a training device according to claim 1, in which a rider (5) rides freely on a motorcycle (4) with the rear wheel (6) in the lateral direction on a roller arrangement (1) with the rear wheel (6), wherein the front wheel (7) is brought from a normal position into a raised support position and the rider (5) can reach an equilibrium position from this support position in which he rides exclusively on the rear wheel (6) with the front wheel (7) raised further.

12. Method according to claim 11, **characterised in that** a free space is provided for further lifting of the front wheel (7) of the motorcycle (4), which makes it possible to reach the equilibrium position.

13. Method according to one of claims 11 or 12, **characterised in that,** when a dangerous situation is reached, the front wheel (7) of the motorcycle (4) is returned to the support position by limiting the free space.

14. Method according to one of claims 11 to 13, **characterised in that** the roller arrangement (1) is hydraulically braked.

15. Method according to one of claims 11 to 14, **characterised in that** the degree of difficulty of the exercises is increased in the course of the training in that the support position is progressively lowered starting from a strongly raised position in the region of the equilibrium position.

## Revendications

1. Dispositif d'entraînement de motocyclistes comportant un dispositif à rouleaux (1) recevant la roue arrière (6) et un support (2) pour l'appui de la roue avant (7) d'une moto (4),
le support (2) pouvant pivoter à partir de sa position normale vers une position d'appui et partant de cette position d'appui, un dégagement variable permet de soulever la roue avant (7), et
la roue arrière (6) mobile librement dans la direction latérale sur le dispositif de rouleaux (1) restant à sa place,
les rouleaux étant libres en rotation ou freinés,
**caractérisé en ce que**
la position d'appui est de hauteur variable.

2. Dispositif d'entraînement selon la revendication 1
**caractérisé en ce que**
le dispositif de rouleaux (1) comporte au moins un rouleau freiné (9).

3. Dispositif d'entraînement selon la revendication 2,
**caractérisé par**
une installation de commande qui prédéfinit la résistance du rouleau freiné (9) de façon à correspondre à la résistance de circulation et aux efforts de la moto (4) pour l'accélération en mode de fonctionnement réel.

4. Dispositif d'entraînement selon l'une des revendications 1 à 3,
**caractérisé en ce que**
le dispositif de rouleaux (1) comporte au moins deux rouleaux (9) dont au moins l'un a un segment cylindrique (12) sur lequel la roue arrière (6) de la moto (4) peut rouler librement, mobile parallèlement à son axe (8).

5. Dispositif d'entraînement selon la revendication 4,
**caractérisé en ce qu'**
au moins un rouleau (9) du dispositif de rouleaux (1) a latéralement, de part et d'autre du segment cylindrique (12), un segment conique (13a, 13b) dont le diamètre s'agrandit vers l'extérieur,
des segments coniques (13a, 13b) ayant de préférence des structures (15) en forme de vis pour ramener la roue arrière (6) de la moto (4) vers le milieu des rouleaux (9).

6. Dispositif d'entraînement selon l'une des revendications 1 à 5,
**caractérisé en ce que**
le dispositif de rouleaux (1) comporte en plus d'au moins un rouleau freiné (9), un rouleau de sécurité (17) non freiné mobile entre une position normale et une position de sécurité, et la liaison entre la roue arrière (6), de la moto (4) et le rouleau freiné (9) étant interrompue en position de sécurité.

7. Dispositif d'entraînement selon l'une des revendications 1 à 6,
**caractérisé en ce que**
l'espace libre pour la roue avant (7) est réalisé par un dispositif de ceinture (11) de longueur variable.

8. Dispositif d'entraînement selon l'une des revendications 1 à 7,
**caractérisé en ce que**
le support (2) pour l'appui la roue avant (7) permet un mouvement de pivotement libre du guidon (12) de la moto (4).

9. Dispositif d'entraînement selon l'une des revendications 1 à 8,
**caractérisé par**
un appui latéral réglable (5) et en ce que de préférence par une suspension de sécurité (18a, 18b, 19) pour le conducteur (5) de la moto (4).

10. Dispositif d'entraînement selon l'une des revendications 1 à 9,
**caractérisé par**
des rouleaux de limitation (23) montés réglables, de préférence pivotants pour limiter de manière variable le mouvement latéral de la roue arrière (6).

11. Procédé d'entraînement de motocyclistes à l'aide d'un dispositif d'entraînement selon la revendication 1,
selon lequel le conducteur (5) circule sur une moto (4) dont la roue arrière (6) est libre dans la direction latérale sur un dispositif de rouleaux (1), la roue avant (7) étant mise en position d'appui, relevée à partir d'une position normale, et
le conducteur (5), partant de la position d'appui, peut atteindre une position d'équilibre dans laquelle il roule uniquement sur la roue arrière (6), la roue avant (7) restant soulevée.

12. Procédé selon la revendication 11,
**caractérisé en ce qu'**
il est prévu un espace libre pour soulever encore plus la roue avant (7) de la moto (4), et permettant d'atteindre la position d'équilibre.

13. Procédé selon l'une des revendications 11 ou 12,
caractérisé en que
dans une situation dangereuse, la roue avant (7) de la moto (4) est remise en position d'appui en limitant l'espace libre.

14. Procédé selon l'une des revendications 11 à 13,
**caractérisé en ce que**
le dispositif de rouleaux (1) est freiné de manière hydraulique.

15. Procédé selon l'une des revendications 11 à 14,
**caractérisé en ce qu'**
on augmente le degré de difficulté des exercices pendant l'entraînement de façon que la position d'appui passe d'une position fortement relevée dans la zone de la position d'équilibre, en l'abaissant de façon continue.
